# EUROPÄISCHE PATENTSCHRIFT

(11) **EP 2 759 192 B1**
(45) Veröffentlichungstag und Bekanntmachung des Hinweises auf die Patenterteilung: **19.04.2017**
(21) Anmeldenummer: 14151441.4
(22) Anmeldetag: 16.01.2014
(51) Int. Cl.: A01B 63/10, A01D 78/10, A01D 69/03

(54) **Zusatzgerät für eine landwirtschaftliche Arbeitsmaschine**
Attachment for an agricultural work machine
Accessoire pour machine de travail agricole

(30) Priorität: 24.01.2013 DE 102013001175
(43) Veröffentlichungstag der Anmeldung: 30.07.2014
(73) Patentinhaber: CLAAS Saulgau GmbH, 88348 Bad Saulgau (DE)
(72) Erfinder: Fedde, Thomas, 33129 Delbrück (DE); Zimmermann, Matthias, 34479 Breuna (DE)

(56) Entgegenhaltungen:
- US-A- 5 332 053
- US-A1- 2011 036 651
- US-B1- 6 170 412

## Beschreibung

Die Erfindung betrifft ein Zusatzgerät für eine landwirtschaftliche Arbeitsmaschine. Solch ein landwirtschaftliches Zusatzgerät kann z.B. ein Anbaugerät oder eine nicht selbstfahrende gezogene Landmaschine wie ein Ladewagen oder ein Schwader sein. Die selbstfahrende landwirtschaftliche Arbeitsmaschine ist insbesondere als Traktor, Schlepper oder ähnliche Zugmaschine ausgebildet.

US 5,332,053 offenbart einen kombinierten Hydraulikkreis für ein hydraulisch angetriebenes Anbaugerät eines motorgetriebenen Trägerfahrzeugs, wobei der Hydraulikkreis des Trägerfahrzeugs zur Reinigung, Kühlung sowie einer partiellen Druckerhöhung des Hydraulikkreises des Anbaugeräts genutzt wird.

Aus DE 695 13 718 T2 ist ein Kreiselschwader als Zusatzgerät für eine landwirtschaftliche Arbeitsmaschine wie einen Traktor oder Schlepper bekannt. Dieser Kreiselschwader weist einen Hydraulikantrieb in Form eines Hydraulikmotors zum Antrieb eines Kreisels auf. Dieser Kreiselschwader kann außerdem eine eigene Hydraulikpumpeneinheit aufweisen, die eingerichtet ist, ein Hydraulikfluid mit einem vorbestimmten Arbeitsdruck zu fördern. Der Hydraulikmotor ist in diesem Fall über zwei Hydraulikleitungen mit der auf dem Kreiselschwader angeordneten Hydraulikpumpeneinheit fluidverbunden, um dem Hydraulikmotor unter Arbeitsdruck stehendes Hydraulikfluid zuzuführen und das von dem Hydraulikmotor ausgegebene Hydraulikfluid wieder von diesem abzuführen.

Derartige bekannte Zusatzgeräte mit Hydraulikantrieb werden üblicherweise im offenen hydraulischen Kreislauf betrieben. Die dabei entstehende hydraulische Verlustleistung schlägt sich in der Erwärmung des Hydraulikfluids (wie z.B. Hydrauliköls) nieder. Um die Temperatur des Hydraulikfluids auf ein zulässiges Temperaturniveau zu beschränken, weisen solche Hydraulikkreisläufe große Tankvolumina bzw. -oberflächen oder einen Kühler für das Hydraulikfluid auf. Durch die großen Tankvolumina und deren Hydraulikfluidinhalte werden die Herstellkosten erhöht und im Laufe der Produktlebensdauer hohe Servicekosten
verursacht. Ein Kühler für das Hydraulikfluid erfordert wiederum einen Kühlerantrieb, welcher verschmutzungsanfällig ist und ebenfalls einen erhöhten Serviceaufwand verursacht.

Der Erfindung liegt die Aufgabe zugrunde, ein wie eingangsgenanntes Zusatzgerät für eine landwirtschaftliche Arbeitsmaschine bereitzustellen, wobei die Verlustleistung des Hydraulikkreislaufs des Zusatzgerätes mit geringerem Aufwand und dennoch zuverlässig abgeführt werden kann.

Dies wird mit einem Zusatzgerät gemäß Anspruch 1 erreicht. Weiterbildungen der Erfindung sind in den abhängigen Ansprüchen definiert.

Gemäß der Erfindung weist ein Zusatzgerät für eine landwirtschaftliche Arbeitsmaschine auf: eine Hydraulikpumpeneinheit, die eingerichtet ist, ein Hydraulikfluid mit einem vorbestimmten Arbeitsdruck zu fördern, eine Antriebseinheit, die mit der Hydraulikpumpeneinheit verbunden ist, um diese zur Bereitstellung des Arbeitsdrucks anzutreiben, einen Hydraulikantrieb mit einem Antriebs-Fluideingang, der über eine Druckleitung mit einem Pumpen-Fluidausgang der Hydraulikpumpeneinheit fluidverbunden ist, um dem Hydraulikantrieb unter Arbeitsdruck stehendes Hydraulikfluid zuzuführen, und einem Antriebs-Fluidausgang, der über eine Speiseleitung mit einem Pumpen-Fluideingang der Hydraulikpumpeneinheit fluidverbunden ist, um der Hydraulikpumpeneinheit von dem Hydraulikantrieb ausgegebenes Hydraulikfluid zuzuführen, und eine Fluidaustauscheinrichtung mit einer Fluidzuführleitung, die mit der Speiseleitung fluidverbunden ist und die in einem Zuführanschluss mündet zum gesteuerten Zuführen von Hydraulikfluid aus einem Hydraulikkreislauf der Arbeitsmaschine, und einer Fluidabführleitung, die strömungsaufwärts der Fluidzuführleitung mit der Speiseleitung fluidverbunden ist und die in einem Abführanschluss mündet zum gesteuerten Abführen von Hydraulikfluid aus der Speiseleitung in den Hydraulikkreislauf der Arbeitsmaschine.

Mit der erfindungsgemäßen Lösung kann die Verlustleistung des Hydraulikkreislaufs des Zusatzgerätes mit geringerem Aufwand und dennoch zuverlässig in den Hydraulikkreislauf der Arbeitsmaschine abgeführt werden.

Gemäß der Erfindung kann das landwirtschaftliche Zusatzgerät insbesondere als ein Anbaugerät oder eine nicht selbstfahrende gezogene Landmaschine wie ein Ladewagen oder ein Schwader ausgebildet sein. Ferner kann die selbstfahrende landwirtschaftliche Arbeitsmaschine insbesondere als Traktor, Schlepper oder ähnliche Zugmaschine ausgebildet sein.

Gemäß der Erfindung ist der Hydraulikkreislauf des Zusatzgerätes als geschlossener Hydraulikkreislauf ausgebildet. Die Hydraulikpumpeneinheit arbeitet bevorzugt mit Konstantdruck und fördert bei Lasten unterhalb ihres Einstellwertes einen konstanten Volumenstrom von Hydraulikfluid zum Hydraulikantrieb, welcher insbesondere als Hydraulikmotor zum Bereitstellen von Drehantriebsleistung ausgebildet ist. Die Antriebseinheit für die Hydraulikpumpeneinheit kann insbesondere als Elektromotor mit oder ohne abtriebsseitig angeordnetem Getriebe ausgebildet sein, wobei die Stromversorgung im Falle des Elektromotors bevorzugt über das Bordnetz der Arbeitsmaschine erfolgt.

Statt mit einem Elektromotor kann die Hydraulikpumpeneinheit auch alternativ über einen Nebenabtrieb der Arbeitsmaschine angetrieben werden. Dieser Nebenabtrieb wird allgemein auch als Zapfwelle oder nach der Abkürzung des englischen Begriffs "power take-off" als PTO bezeichnet und die mechanische Antriebsenergie kann in allgemein bekannter Weise über eine Gelenkwellenanordnung zur Hydraulikpumpeneinheit geführt werden. Ggf. kann zwischen dem Nebenabtrieb und der Hydraulikpumpeneinheit auch ein Getriebe angeordnet werden.

Der Hydraulikkreislauf der Arbeitsmaschine ist bevorzugt als gekühlter Hydraulikkreislauf ausgebildet und verfügt demgemäß bevorzugt über eigene darin installierte Kühlleistung (Hydraulikfluidkühler).

Die erfindungsgemäße Lösung vermeidet die Beschränkungen der bekannten Systeme und macht sich die Kühlleistung der Arbeitsmaschine wie z.B. eines Traktors mit Hilfe einer Ausspüllösung zu nutze.

Durch eine Ausspülung des geschlossenen Hydraulikkreislaufs des Zusatzgerätes zwischen Hydraulikpumpeneinheit und Hydraulikantrieb wird Wärme ausgespült. Hierbei wird relativ kaltes Hydraulikfluid aus der Arbeitshydraulik der Arbeitsmaschine in den geschlossenen Hydraulikkreislauf des Zusatzgerätes eingespült und relativ warmes Hydraulikfluid aus dem geschlossenen Hydraulikkreislauf des Zusatzgerätes in die Arbeitshydraulik der Arbeitsmaschine ausgespült. Es findet also ein Wärmeaustausch vom Zusatzgerät zur Arbeitsmaschine hin statt. Die in der Arbeitsmaschine installierte Kühlleistung wird sich zu Nutze gemacht, um die im Zusatzgerät entstandene Wärme an die Umgebung abzugeben.

Gemäß der Erfindung weist die Fluidaustauscheinrichtung ein Stromregelventil, das in die Fluidzuführleitung eingebunden ist, um einen gewünschten Zuführvolumenstrom von Hydraulikfluid aus dem Hydraulikkreislauf der Arbeitsmaschine in die Speiseleitung zu realisieren, und ein Vorspannventil auf, das in die Fluidabführleitung eingebunden ist, um eine in der Speiseleitung durch den Zuführvolumenstrom bewirkte Druckerhöhung durch Abgeben eines Abführvolumenstroms von Hydraulikfluid aus der Speiseleitung in den Hydraulikkreislauf der Arbeitsmaschine auszugleichen.

Über das in der Arbeitshydraulik des Zusatzgerätes befindliche Stromregelventil wird ein konstanter Zuführvolumenstrom von relativ kühlem Hydraulikfluid aus der Arbeitshydraulik der Arbeitsmaschine in die Speiseleitung der Arbeitshydraulik des Zusatzgerätes eingespült. Über das Vorspannventil, dessen Druckeinstellung einen Speisedruck für die Hydraulikpumpeneinheit bestimmt, wird die gleiche Menge an relativ heißem Hydraulikfluid in die Arbeitshydraulik der Arbeitsmaschine ausgespült. Die Arbeitshydraulik des Zusatzgerätes gibt also definiert und geregelt Wärmeenergie an die Arbeitshydraulik der Arbeitsmaschine ab, die wiederum mit der in ihr installierten Kühlleistung das Gesamtsystem Arbeitsmaschine/Zusatzgerät kühlt. Somit lässt sich bei geringem Aufwand eine noch zuverlässigere Abführung der Verlustleistung des Hydraulikkreislaufs des Zusatzgerätes erzielen.

Gemäß einer Ausführungsform der Erfindung weist die Fluidaustauscheinrichtung ein Steuerventil auf, das in die Fluidzuführleitung eingebunden ist, um selektiv die Zufuhr von Hydraulikfluid aus dem Hydraulikkreislauf der Arbeitsmaschine in die Speiseleitung zuzulassen oder zu unterbinden. Das Steuerventil ist bevorzugt als Absperrventil oder als 2/2-Wegeventil ausgebildet. Mit dem Steuerventil ist die Zuführung von Hydraulikfluid aus einem Hydraulikkreislauf der Arbeitsmaschine, wie z.B. der mittels des Stromregelventils erzeugte konstante Zuführvolumenstrom, leckagefrei selektiv zu- und abschaltbar.
Gemäß noch einer Ausführungsform der Erfindung weist die Fluidaustauscheinrichtung einen Drucksensor auf, der eingerichtet ist, einen Druck des Hydraulikfluids in der Speiseleitung zu erfassen und ein entsprechendes Drucksignal auszugeben, und der mit dem Steuerventil signalverbunden ist, sodass bei Überschreitung eines vorbestimmten Grenzdrucks des Hydraulikfluids in der Speiseleitung die Zufuhr von Hydraulikfluid aus dem Hydraulikkreislauf der Arbeitsmaschine in die Speiseleitung unterbunden wird. Eine solche Überschreitung des Grenzdrucks kann z.B. vorkommen, wenn der Bediener des Gesamtsystems Arbeitsmaschine/Zusatzgerät das Verbinden des Abführanschlusses mit dem Hydraulikkreislauf der Arbeitsmaschine vergisst. In diesem Fall schaltet das Steuerventil nach Erfassen der Drucküberschreitung durch den Drucksensor den Zuführvolumenstrom automatisch ab, womit die Betriebssicherheit des Zusatzgerätes erhöht wird.
Gemäß noch einer weiteren Ausführungsform der Erfindung weist die Fluidaustauscheinrichtung einen Druckspeicher auf, der an die Speiseleitung angeschlossen ist, um überschüssiges Hydraulikfluid aus der Speiseleitung aufzunehmen. Damit können kurzfristige Druckspitzen in der Speiseleitung kompensiert werden. Zudem kann eine Reaktionszeit des Abschaltvorgangs des Steuerventils kompensiert werden, sodass die Betriebssicherheit des Zusatzgerätes weiter erhöht wird.
Gemäß einer Ausführungsform der Erfindung weist die Fluidaustauscheinrichtung einen Temperatursensor auf, der eingerichtet ist, eine Temperatur des Hydraulikfluids in der Speiseleitung zu erfassen und ein entsprechendes Temperatursignal auszugeben. Damit lassen sich erhöhte Hydraulikfluidtemperaturen automatisch erkennen. Gemäß der Erfindung kann das Temperatursignal zur Aktivierung einer Warneinrichtung für den Bediener und/oder für die Beeinflussung des Stromregelventils verwendet werden, sodass erhöhte Hydraulikfluidtemperaturen sicher erkannt und bevorzugt automatisch heruntergeregelt werden können, indem der Zuführvolumenstrom und damit auch der Abführvolumenstrom von Hydraulikfluid erhöht werden. Im Ergebnis werden die Zuverlässigkeit und die Betriebssicherheit des Zusatzgerätes weiter erhöht.
Gemäß noch einer Ausführungsform der Erfindung weist das Zusatzgerät eine Leckagehandhabungseinrichtung auf, die eingerichtet ist, an dem Zusatzgerät auftretende Hydraulikfluidleckage zu sammeln und zur Aufnahme in den Hydraulikkreislauf der Arbeitsmaschine bereitzustellen. Mit dieser Lösung wird auch die relativ warme Hydraulikfluidleckage zur Kühlung in den Hydraulikkreislauf der Arbeitsmaschine abgeführt und so die Kühlung des Hydraulikkreislaufs des Zusatzgerätes befördert bzw. erleichtert.

Gemäß einer weiteren Ausführungsform der Erfindung weist die Leckagehandhabungseinrichtung einen Sammeltank zum Sammeln der Hydraulikfluidleckage und eine Leckagepumpe auf mit einem Leckagepumpen-Fluideingang, der mit dem Sammeltank fluidverbunden ist, um Hydraulikfluidleckage aus dem Sammeltank herauszufördern, und einem Leckagepumpen-Fluidausgang, der über eine Leckageabführleitung mit dem Abführanschluss der Fluidaustauscheinrichtung fluidverbunden ist, sodass die Hydraulikfluidleckage aus dem Sammeltank selektiv dem Abführanschluss zuführbar ist.

Gemäß noch einer weiteren Ausführungsform der Erfindung weist die Leckagehandhabungseinrichtung eine in den Sammeltank mündende Umlaufleitung, die an die Leckageabführleitung angeschlossen ist und in die ein Steuerventil eingebunden ist, das eingerichtet ist, selektiv eine Rückführung der Hydraulikfluidleckage aus der Leckageabführleitung in den Sammeltank zuzulassen oder zu unterbinden, und ein Rückschlagventil auf, das strömungsabwärts des Anschlusses der Umlaufleitung in die Leckageabführleitung eingebunden ist, um einen Rückfluss von Hydraulikfluid vom Abführanschluss in Richtung zur Leckagehandhabungseinrichtung hin zu sperren.

Auftretende Hydraulikfluidleckage wird z.B. über Leckageleitungen aufgefangen und in den Sammeltank abgeführt, welcher bevorzugt mit einer Schwimmerschaltung versehen ist, die das Steuerventil (z.B. ein 2/2-Wegeventil oder ein Absperrventil) schaltet. Bei vollem Sammeltank wird der drucklose Umlauf der bevorzugt als Zahnradpumpe ausgeführten Leckagepumpe geschlossen und fördert die Leckagepumpe den Inhalt des Sammeltanks über das Rückschlagventil zum Abführanschluss und von dort bevorzugt in eine Tankleitung des Hydrauliksystems der Arbeitsmaschine. Ist der Sammeltank geleert, wird die Leckagepumpe über die Schwimmerschaltung und das Steuerventil wieder in einen drucklosen Umlauf geschaltet. Das Rückschlagventil verhindert einen Fluss von Hydraulikfluid von der Tankleitung in den Sammeltank. Mit dieser Lösung kann die Hydraulikfluidleckage selektiv und zwangsgesteuert in den Hydraulikkreislauf der Arbeitsmaschine abgeführt werden, wobei zuverlässig ein Rückströmen des Hydraulikfluids verhindert wird.

Alternativ zu dieser Lösung besteht die Möglichkeit, die auftretende Hydraulikfluidleckage direkt über eine drucklose Leckageleitung zur Arbeitsmaschine zurückzuführen. Für den Fall, dass diese Leckageleitung nicht an die Arbeitsmaschine angeschlossen wird, bedarf es zur Druckabsicherung eines Druckschalters, der einen Überdruck in der Leckageleitung detektiert, und eines Speichers, der eine Zwischenspeicherung einer geringen Menge von Hydraulikfluidleckage ermöglicht, bis der Bediener eine Warnmeldung erhalten hat.

Gemäß noch einer Ausführungsform der Erfindung weist die Hydraulikpumpeneinheit eine hydraulische Pumpensteuereinheit zum Steuern des Arbeitsdrucks auf, wobei die Pumpensteuereinheit ein Steuerventil aufweist, welches eingerichtet ist, selektiv einen Steuerdruck der Pumpensteuereinheit abzubauen, sodass die Hydraulikpumpeneinheit das Hydraulikfluid mit einem gegenüber dem Arbeitsdruck reduzierten vorbestimmten Minimaldruck fördert, welcher keinen Betrieb des Hydraulikantriebs bewirkt.

Mit Hilfe des Steuerventils, welches z.B. als Absperrventil oder als 2/2-Wegeventil ausgebildet sein kann, kann z.B. eine Federkammer der Pumpensteuereinheit zu einem Tank hin entlastet werden, wodurch die Hydraulikpumpeneinheit lediglich einen Stand-by-Druck erzeugt, welcher bevorzugt geringer ausgelegt ist, als der für den Betrieb (z.B. die Bereitstellung von Drehantriebsleistung) des Hydraulikantriebs notwendige Mindestdruck, sodass diese Stand-by-Schaltung genutzt werden kann, um z.B. Kreisel eines Kreiselschwaders einzeln abzuschalten.

Gemäß der Erfindung sind alle Sensoren und Ventile bevorzugt mit einem elektronischen Steuergerät (ESG) verbunden, welches einen Signalaustausch und eine Signalauswertung sowie eine Ansteuerung (zum Steuern oder Regeln) der Komponenten des Zusatzgerätes realisiert. Die Ventile sind bevorzugt als elektromagnetische Ventile bzw. solenoidgesteuerte Ventile ausgebildet.

Im Folgenden wird die Erfindung anhand einer bevorzugten Ausführungsform und unter Bezugnahme auf die beigefügte Figur detaillierter beschrieben.

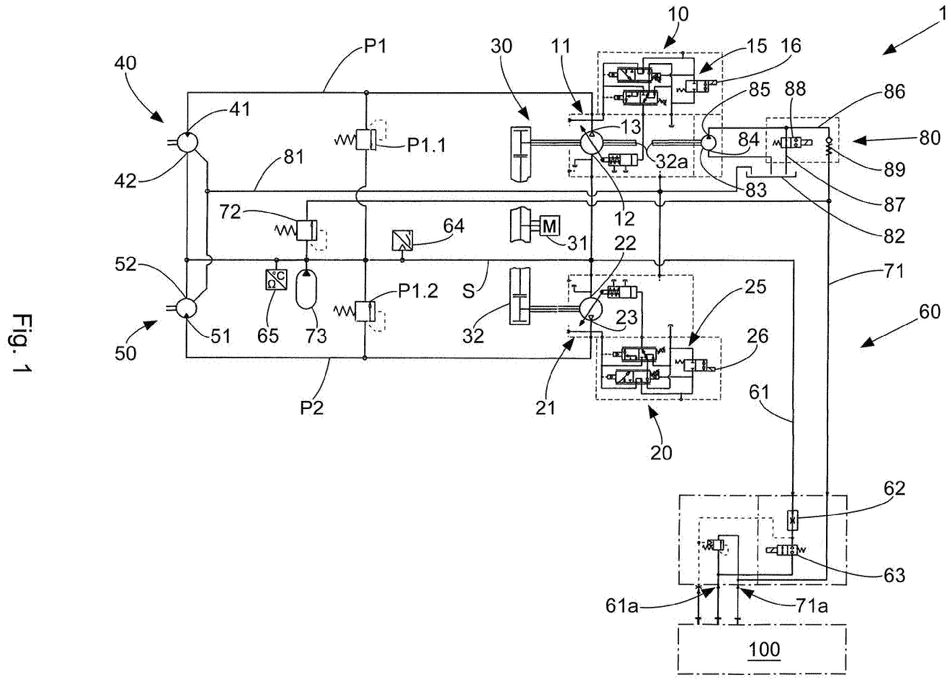

- Fig.1: zeigt ein Schaltbild eines Hydraulikreislaufs eines landwirtschaftlichen Zusatzgerätes für eine landwirtschaftliche Arbeitsmaschine gemäß einer Ausführungsform der Erfindung.

Das in Fig.1 gezeigte nicht selbstfahrende landwirtschaftliche Zusatzgerät 1 ist als Kreiselschwader ausgebildet und dazu vorgesehen, an eine landwirtschaftliche Arbeitsmaschine 100 wie einen als Zugmaschine wirkenden Traktor angehängt zu werden.
Wie aus Fig.1 ersichtlich, weist das Zusatzgerät 1 eine Hydraulikpumpeneinheit 10-20, eine Antriebseinheit 30 für die Hydraulikpumpeneinheit 10-20, zwei jeweils als Orbitalmotor zum Bereitstellen von Drehantriebsleistung für Kreisel (nicht gezeigt) des Zusatzgerätes 1 ausgebildete Hydraulikantriebe 40 und 50, eine Fluidaustauscheinrichtung 60 und eine Leckagehandhabungseinrichtung 80 auf.

Das Zusatzgerät 1 weist eine Mehrzahl von im Folgenden erläuterten Ventilen und Sensoren zur Steuerung bzw. Regelung des Hydraulikkreislaufs des Zusatzgerätes 1 auf. Die Sensoren und Ventile sind über nicht dargestellte Signalleitungen mit einem elektronischen Steuergerät (nicht gezeigt) verbunden, welches einen Signalaustausch und eine Signalauswertung sowie eine Ansteuerung (zum Steuern oder Regeln) der Komponenten des Zusatzgerätes 1 realisiert. Die Ventile sind als elektromagnetische Ventile bzw. solenoidgesteuerte Ventile ausgebildet.

Die Hydraulikpumpeneinheit 10-20 ist eingerichtet, ein Hydraulikfluid (wie z.B. Hydrauliköl) mit einem vorbestimmten Arbeitsdruck zu fördern. Die Hydraulikpumpeneinheit 10-20 weist für jeden der beiden Hydraulikantriebe 40, 50 eine eigene jeweils als Konstantdruckpumpe ausgebildete Hydraulikpumpe 11, 21 auf, welche bei Lasten unterhalb ihres Einstellwertes einen konstanten Volumenstrom von Hydraulikfluid zum jeweils zugehörigen der Hydraulikantriebe 40, 50 fördert. Die Antriebseinheit 30 weist einen Elektromotor 31 und ein abtriebsseitig an diesem vorgesehenes Getriebe 32 auf, über welches der Elektromotor 31 mit beiden Hydraulikpumpen 11, 21 der Hydraulikpumpeneinheit 10-20 verbunden ist, um diese zur Bereitstellung des Arbeitsdrucks jeweils anzutreiben.

Jeder der beiden Hydraulikantriebe 40, 50 hat einen Antriebs-Fluideingang 41 bzw. 51, der über eine jeweilige Druckleitung P1 bzw. P2 mit einem Pumpen-Fluidausgang 13 bzw. 23 der zugehörigen Hydraulikpumpe 11 bzw. 21 der Hydraulikpumpeneinheit 10-20 fluidverbunden ist, um dem jeweiligen Hydraulikantrieb 40, 50 unter Arbeitsdruck stehendes Hydraulikfluid zuzuführen.

Jeder der beiden Hydraulikantriebe 40, 50 hat außerdem einen Antriebs-Fluidausgang 42 bzw. 52, der über eine Speiseleitung S mit einem Pumpen-Fluideingang 12 bzw. 22 der zugehörigen Hydraulikpumpe 11 bzw. 21 der Hydraulikpumpeneinheit 10-20 fluidverbunden ist, um den Hydraulikpumpen 11, 21 der Hydraulikpumpeneinheit 10-20 von den beiden Hydraulikantrieben 40, 50 ausgegebenes Hydraulikfluid zuzuführen.

Im Falle einer Überlast begrenzt eine jeweilige Pumpensteuereinheit 15 bzw. 25 (insbesondere ausgelegt zum Regeln) mit Verstelleinheit der Hydraulikpumpen 11, 21 den Arbeitsdruck auf den eingestellten Wert. Im Falle einer von außen aufgebrachten Überlast entlasten jeweilige Druckbegrenzungsventile P1.1 und P1.2 die jeweiligen Druckleitungen P1, P2 zur Speiseleitung S hin.

Die Fluidaustauscheinrichtung 60 weist eine Fluidzuführleitung 61, ein Stromregelventil 62, ein Steuerventil 63 in Form eines 2/2-Wegeventils, einen Drucksensor 64, einen Temperatursensor 65, eine Fluidabführleitung 71, ein Vorspannventil 72 und einen Druckspeicher 73 auf.

Die Fluidzuführleitung 61 ist mit der Speiseleitung S fluidverbunden und mündet in einem Zuführanschluss 61 a zum gesteuerten Zuführen von Hydraulikfluid aus einem Hydraulikkreislauf (bevorzugt aus einer gekühltes Hydraulikfluid führenden Druckleitung dessen) der Arbeitsmaschine 100. Die Fluidabführleitung 71 ist strömungsaufwärts der Fluidzuführleitung 61 mit der Speiseleitung S fluidverbunden und mündet in einem Abführanschluss 71 a zum gesteuerten Abführen von Hydraulikfluid aus der Speiseleitung S in den Hydraulikkreislauf (bevorzugt in eine Tankleitung dessen) der Arbeitsmaschine 100.

Der Hydraulikkreislauf der Arbeitsmaschine 100 ist als gekühlter Hydraulikkreislauf ausgebildet und verfügt demgemäß über eigene darin installierte Kühlleistung (einen oder mehrere Hydraulikfluidkühler).

Das Stromregelventil 62 ist in die Fluidzuführleitung 61 eingebunden, um einen gewünschten Zuführvolumenstrom von Hydraulikfluid aus dem Hydraulikkreislauf der Arbeitsmaschine 100 in die Speiseleitung S zu realisieren. Das Vorspannventil 72 ist in die Fluidabführleitung 71 eingebunden, um eine in der Speiseleitung S durch den Zuführvolumenstrom bewirkte Druckerhöhung durch in den Hydraulikkreislauf der Arbeitsmaschine 100 Abgeben eines Abführvolumenstroms von Hydraulikfluid aus der Speiseleitung S auszugleichen.

Über das Stromregelventil 62 wird ein konstanter Zuführvolumenstrom von relativ kühlem Hydraulikfluid aus dem Hydraulikkreislauf der Arbeitsmaschine 100 in die Speiseleitung S des Hydraulikkreislaufs des Zusatzgerätes 1 eingespült. Über das Vorspannventil 72, dessen Druckeinstellung einen Speisedruck für die Hydraulikpumpeneinheit 10-20 bestimmt, wird die gleiche Menge an relativ heißem Hydraulikfluid in den Hydraulikkreislauf der Arbeitsmaschine 100 ausgespült. Der Hydraulikkreislauf des Zusatzgerätes 1 gibt also definiert und geregelt Wärmeenergie an den Hydraulikkreislauf der Arbeitsmaschine 100 ab, die wiederum mit der in ihr installierten Kühlleistung das Gesamtsystem Arbeitsmaschine/Zusatzgerät kühlt. Somit lässt sich bei geringem Aufwand eine zuverlässigere Abführung der Verlustleistung des Hydraulikkreislaufs des Zusatzgerätes 1 erzielen.

Das Steuerventil 63 der Fluidaustauscheinrichtung 60 ist in die Fluidzuführleitung 61 strömungsaufwärts des Stromregelventils 62 eingebunden, um selektiv die Zufuhr von Hydraulikfluid aus dem Hydraulikkreislauf der Arbeitsmaschine 100 in die Speiseleitung S zuzulassen oder zu unterbinden. Mit dem Steuerventil 63 ist die Zuführung von Hydraulikfluid aus dem Hydraulikkreislauf der Arbeitsmaschine 100 leckagefrei selektiv zu- und abschaltbar.

Der Drucksensor 64 ist eingerichtet, einen Druck des Hydraulikfluids in der Speiseleitung S zu erfassen und ein entsprechendes Drucksignal an das Steuergerät auszugeben, welches mit dem in die Fluidzuführleitung 61 eingebundenen Steuerventil 63 signalverbunden ist, sodass bei Überschreitung eines vorbestimmten Grenzdrucks des Hydraulikfluids in der Speiseleitung S die Zufuhr von Hydraulikfluid aus dem Hydraulikkreislauf der Arbeitsmaschine 100 in die Speiseleitung S unterbunden wird.

Wenn der Bediener des Gesamtsystems Arbeitsmaschine/Zusatzgerät z.B. das Verbinden des Abführanschlusses 71 a mit dem Hydraulikkreislauf der Arbeitsmaschine 100 vergisst, kann es zu einer Überschreitung des Grenzdrucks kommen. In diesem Fall schaltet das Steuerventil 63 nach durch den Drucksensor 64 Erfassen der Drucküberschreitung den Zuführvolumenstrom automatisch ab.

Der Druckspeicher 73 ist an die Speiseleitung S angeschlossen, um überschüssiges Hydraulikfluid aus der Speiseleitung S aufzunehmen. Damit können kurzfristige Druckspitzen in der Speiseleitung S, wie während einer Reaktionszeit des Abschaltvorgangs des Steuerventils 63, kompensiert werden.

Der Temperatursensor 65 ist eingerichtet, eine Temperatur des Hydraulikfluids in der Speiseleitung S zu erfassen und ein entsprechendes Temperatursignal an das Steuergerät auszugeben. Das Temperatursignal kann zur Aktivierung einer nicht gezeigten Warneinrichtung für den Bediener und/oder für die Beeinflussung des Stromregelventils 62 verwendet werden, sodass erhöhte Hydraulikfluidtemperaturen sicher erkannt und automatisch heruntergeregelt werden können, indem der Zuführvolumenstrom und damit auch der Abführvolumenstrom von Hydraulikfluid erhöht werden.

Die Leckagehandhabungseinrichtung 80 ist eingerichtet, an dem Zusatzgerät 1 auftretende Hydraulikfluidleckage zu sammeln und zur Aufnahme in den Hydraulikkreislauf der Arbeitsmaschine 100 bereitzustellen.

Die Leckagehandhabungseinrichtung weist eine Leckageleitung 81 zum Aufnehmen von Hydraulikfluidleckage an den Hydraulikantrieben 40, 50 und der Hydraulikpumpeneinheit 10-20, einen Sammeltank 82 zum Sammeln der Hydraulikfluidleckage aus der Leckageleitung 81, eine Leckagepumpe 83 mit einem Leckagepumpen-Fluideingang 84 und einem Leckagepumpen-Fluidausgang 85, eine Leckageabführleitung 86, eine Umlaufleitung 87, ein als 2/2-Wegeventil ausgebildetes Steuerventil 88 und ein Rückschlagventil 89 auf.

Die Leckagepumpe 83 wird über eine Verbindungswelle 32a des Getriebes 30 der Antriebseinheit 30 drehangetrieben. Der Leckagepumpen-Fluideingang 84 der Leckagepumpe 83 ist mit dem Sammeltank 82 fluidverbunden, um Hydraulikfluidleckage aus dem Sammeltank 82 herauszufördern. Der Leckagepumpen-Fluidausgang 85 der Leckagepumpe 83 ist über die Leckageabführleitung 86 und die Fluidabführleitung 71 mit dem Abführanschluss 71 a der Fluidaustauscheinrichtung 60 fluidverbunden, sodass die Hydraulikfluidleckage aus dem Sammeltank 82 selektiv dem Abführanschluss 71 a und darüber dem Hydrauliksystem der Arbeitsmaschine 100 zuführbar ist.

Für diese selektive Steuerung der Hydraulikfluidleckage ist die Umlaufleitung 87 an die Leckageabführleitung 86 angeschlossen mündet in den Sammeltank 82, wobei in die Umlaufleitung 87 das Steuerventil 88 eingebunden ist, das eingerichtet ist, selektiv eine Rückführung der Hydraulikfluidleckage aus der Leckageabführleitung 86 in den Sammeltank 82 zuzulassen oder zu unterbinden.

Das Rückschlagventil 89 ist strömungsabwärts des Anschlusses der Umlaufleitung 87 in die Leckageabführleitung 86 eingebunden, um einen Rückfluss von Hydraulikfluid vom Abführanschluss 71 a in Richtung zur Leckagehandhabungseinrichtung 80 hin zu sperren.

Durch die Leckagehandhabungseinrichtung 80 kann auftretende Hydraulikfluidleckage über die Leckageleitung 81 aufgefangen und in den mit der Schwimmerschaltung versehenen Sammeltank 82 abgeführt werden. Die Schwimmerschaltung ist mit dem Steuergerät verbunden, welches wiederum das Steuerventil 88 der Leckagehandhabungseinrichtung 80 schaltet. Bei vollem Sammeltank 82 wird der drucklose Umlauf der bevorzugt als Zahnradpumpe ausgeführten Leckagepumpe 83 durch mittels des Steuerventils 88 sperren der Umlaufleitung 87 geschlossen und fördert die Leckagepumpe 83 den Inhalt des Sammeltanks über das Rückschlagventil 89 zum Abführanschluss 71 a und von dort in die Tankleitung des Hydrauliksystems der Arbeitsmaschine 100. Ist der Sammeltank 82 geleert, wird die Leckagepumpe 83 über die Schwimmerschaltung, das Steuergerät und das Steuerventil 88 der Leckagehandhabungseinrichtung 80 mittels Freigebens der Umlaufleitung 87 wieder in einen drucklosen Umlauf geschaltet. Das Rückschlagventil 89 verhindert einen Fluss von Hydraulikfluid von der Tankleitung des Hydrauliksystems der Arbeitsmaschine 100 in den Sammeltank 82.

Schließlich weisen die jeweiligen Pumpensteuereinheiten 15 bzw. 25 der Hydraulikpumpen 11, 21 jeweils ein hier z.B. als 2/2-Wegeventil ausgebildetes Steuerventil 16 bzw. 26 auf, welches eingerichtet ist, selektiv einen Steuerdruck der zugehörigen Pumpensteuereinheit 15 bzw. 25 abzubauen, sodass die zugehörige Hydraulikpumpe 11, 21 der Hydraulikpumpeneinheit 10-20 das Hydraulikfluid mit einem gegenüber dem Arbeitsdruck reduzierten vorbestimmten Minimaldruck fördert, welcher keinen Betrieb des an die betreffende Hydraulikpumpe 11, 21 druckseitig angeschlossenen Hydraulikantriebs 40, 50 bewirkt.

Mit Hilfe des Steuerventils 16, 26 wird hier bevorzugt eine Federkammer der Pumpensteuereinheit 15, 25 zu einem Tank hin entlastet werden, wodurch die zugehörige Hydraulikpumpe 11, 21 der Hydraulikpumpeneinheit 10-20 lediglich einen Stand-by-Druck erzeugt, welcher bevorzugt geringer ausgelegt ist, als der für den Betrieb (die Bereitstellung von Drehantriebsleistung) des jeweils druckseitig angeschlossenen Hydraulikantriebs 40, 50 notwendige Mindestdruck, sodass diese Stand-by-Schaltung genutzt werden kann, um die Kreisel des hier als Kreiselschwader ausgebildeten Zusatzgerätes 1 einzeln abzuschalten.

### Bezugszeichenliste

- 1: Zusatzgerät
- 10-20: Hydraulikpumpeneinheit
- 11: Hydraulikpumpe
- 12: Pumpen-Fluideingang
- 13: Pumpen-Fluidausgang
- 15: Pumpensteuereinheit
- 16: Steuerventil
- 21: Hydraulikpumpe
- 22: Pumpen-Fluideingang
- 23: Pumpen-Fluidausgang
- 25: Pumpensteuereinheit
- 26: Steuerventil
- 30: Antriebseinheit
- 31: Elektromotor
- 32: Getriebe
- 32a: Verbindungswelle
- 40, 50: Hydraulikantrieb
- 41, 51: Antriebs-Fluideingang
- 42, 52: Antriebs-Fluidausgang
- 60: Fluidaustauscheinrichtung
- 61: Fluidzuführleitung
- 61a: Zuführanschluss
- 62: Stromregelventil
- 63: Steuerventil
- 64: Drucksensor
- 65: Temperatursensor
- 71: Fluidabführleitung
- 71a: Abführanschluss
- 72: Vorspannventil
- 73: Druckspeicher
- 80: Leckagehandhabungseinrichtung
- 81: Leckageleitung
- 82: Sammeltank
- 83: Leckagepumpe
- 84: Leckagepumpen-Fluideingang
- 85: Leckagepumpen-Fluidausgang
- 86: Leckageabführleitung
- 87: Umlaufleitung
- 88: Steuerventil
- 89: Rückschlagventil
- 100: Arbeitsmaschine
- P1, P2: Druckleitung
- P1.1, P1.2: Druckbegrenzungsventil
- S: Speiseleitung

## Patentansprüche

1. Zusatzgerät (1) für eine landwirtschaftliche Arbeitsmaschine (100), aufweisend:
eine Hydraulikpumpeneinheit (10-20), die eingerichtet ist, ein Hydraulikfluid mit einem vorbestimmten Arbeitsdruck zu fördern,
eine Antriebseinheit (30), die mit der Hydraulikpumpeneinheit (10-20) verbunden ist, um diese zur Bereitstellung des Arbeitsdrucks anzutreiben,
einen Hydraulikantrieb (40, 50) mit einem Antriebs-Fluideingang (41, 51), der über eine Druckleitung (P1, P2) mit einem Pumpen-Fluidausgang (13, 23) der Hydraulikpumpeneinheit (10-20) fluidverbunden ist, um dem Hydraulikantrieb (40, 50) unter Arbeitsdruck stehendes Hydraulikfluid zuzuführen, und einem Antriebs-Fluidausgang (42, 52), der über eine Speiseleitung (S) mit einem Pumpen-Fluideingang (12, 22) der Hydraulikpumpeneinheit (10-20) fluidverbunden ist, um der Hydraulikpumpeneinheit (10-20) von dem Hydraulikantrieb (40, 50) ausgegebenes Hydraulikfluid zuzuführen, und
eine Fluidaustauscheinrichtung (60) mit einer Fluidzuführleitung (61), die mit der Speiseleitung (S) fluidverbunden ist und die in einem Zuführanschluss (61 a) mündet zum gesteuerten Zuführen von Hydraulikfluid aus einem Hydraulikkreislauf der Arbeitsmaschine (100), und einer Fluidabführleitung (71), die strömungsaufwärts der Fluidzuführleitung (61) mit der Speiseleitung (S) fluidverbunden ist und die in einem Abführanschluss (71a) mündet zum gesteuerten Abführen von Hydraulikfluid aus der Speiseleitung (S) in den Hydraulikkreislauf der Arbeitsmaschine (100), **dadurch gekennzeichnet, dass** die Fluidaustauscheinrichtung (60) ein Stromregelventil (62), das in die Fluidzuführleitung (61) eingebunden ist, um einen gewünschten Zuführvolumenstrom von Hydraulikfluid aus dem Hydraulikkreislauf der Arbeitsmaschine (100) in die Speiseleitung (S) zu realisieren, und ein Vorspannventil (72) aufweist, das in die Fluidabführleitung (71) eingebunden ist, um eine in der Speiseleitung (S) durch den Zuführvolumenstrom bewirkte Druckerhöhung durch Abgeben eines Abführvolumenstroms von Hydraulikfluid aus der Speiseleitung (S) in den Hydraulikkreislauf der Arbeitsmaschine (100) auszugleichen.

2. Zusatzgerät (1) gemäß Anspruch 1, wobei die Fluidaustauscheinrichtung (60) ein Steuerventil (63) aufweist, das in die Fluidzuführleitung (61) eingebunden ist, um selektiv die Zufuhr von Hydraulikfluid aus dem Hydraulikkreislauf der Arbeitsmaschine (100) in die Speiseleitung (S) zuzulassen oder zu unterbinden.

3. Zusatzgerät (1) gemäß Anspruch 2, wobei die Fluidaustauscheinrichtung (60) einen Drucksensor (64) aufweist, der eingerichtet ist, einen Druck des Hydraulikfluids in der Speiseleitung (S) zu erfassen und ein entsprechendes Drucksignal auszugeben, und der mit dem Steuerventil (63) signalverbunden ist, sodass bei Überschreitung eines vorbestimmten Grenzdrucks des Hydraulikfluids in der Speiseleitung (S) die Zufuhr von Hydraulikfluid aus dem Hydraulikkreislauf der Arbeitsmaschine (100) in die Speiseleitung (S) unterbunden wird.

4. Zusatzgerät (1) gemäß einem der Ansprüche 1 bis 3, wobei die Fluidaustauscheinrichtung (60) einen Druckspeicher (73) aufweist, der an die Speiseleitung (S) angeschlossen ist, um überschüssiges Hydraulikfluid aus der Speiseleitung (S) aufzunehmen.

5. Zusatzgerät (1) gemäß einem der Ansprüche 1 bis 4, wobei die Fluidaustauscheinrichtung (60) einen Temperatursensor (65) aufweist, der eingerichtet ist, eine Temperatur des Hydraulikfluids in der Speiseleitung (S) zu erfassen und ein entsprechendes Temperatursignal auszugeben.

6. Zusatzgerät (1) gemäß einem der Ansprüche 1 bis 5, mit einer Leckagehandhabungseinrichtung (80), die eingerichtet ist, an dem Zusatzgerät (1) auftretende Hydraulikfluidleckage zu sammeln und zur Aufnahme in den Hydraulikkreislauf der Arbeitsmaschine (100) bereitzustellen.

7. Zusatzgerät (1) gemäß Anspruch 6, wobei die Leckagehandhabungseinrichtung (80) einen Sammeltank (82) zum Sammeln der Hydraulikfluidleckage und eine Leckagepumpe (83) aufweist mit einem Leckagepumpen-Fluideingang (84), der mit dem Sammeltank (82) fluidverbunden ist, um Hydraulikfluidleckage aus dem Sammeltank (82) herauszufördern, und einem Leckagepumpen-Fluidausgang (85), der über eine Leckageabführleitung (86) mit dem Abführanschluss (71a) der Fluidaustauscheinrichtung (60) fluidverbunden ist, sodass die Hydraulikfluidleckage aus dem Sammeltank (82) selektiv dem Abführanschluss (71 a) zuführbar ist.

8. Zusatzgerät (1) gemäß Anspruch 7, wobei die Leckagehandhabungseinrichtung (80) eine in den Sammeltank (82) mündende Umlaufleitung (87), die an die Leckageabführleitung (86) angeschlossen ist und in die ein Steuerventil (88) eingebunden ist, das eingerichtet ist, selektiv eine Rückführung der Hydraulikfluidleckage aus der Leckageabführleitung (86) in den Sammeltank (82) zuzulassen oder zu unterbinden, und ein Rückschlagventil (89) aufweist, das strömungsabwärts des Anschlusses der Umlaufleitung (87) in die Leckageabführleitung (86) eingebunden ist, um einen Rückfluss von Hydraulikfluid vom Abführanschluss (71 a) in Richtung zur Leckagehandhabungseinrichtung (80) hin zu sperren.

9. Zusatzgerät (1) gemäß einem der Ansprüche 1 bis 8, wobei die Hydraulikpumpeneinheit (10-20) eine hydraulische Pumpensteuereinheit (15, 25) zum Steuern des Arbeitsdrucks aufweist, und wobei die Pumpensteuereinheit (15, 25) ein Steuerventil (16, 26) aufweist, welches eingerichtet ist, selektiv einen Steuerdruck der Pumpensteuereinheit (15, 25) abzubauen, sodass die Hydraulikpumpeneinheit (10-20) das Hydraulikfluid mit einem gegenüber dem Arbeitsdruck reduzierten vorbestimmten Minimaldruck fördert, welcher keinen Betrieb des Hydraulikantriebs (40, 50) bewirkt.

## Claims

1. An ancillary implement (1) for an agricultural working machine (100) comprising:
a hydraulic pump unit (10-20) adapted to deliver a hydraulic fluid at a predetermined working pressure,
a drive unit (30) connected to the hydraulic pump unit (10-20) to drive same to provide the working pressure,
a hydraulic drive means (40, 50) having a drive fluid inlet (41, 51) in fluid communication by way of a pressure line (P1, P2) with a pump fluid outlet (13, 23) of the hydraulic pump unit (10-20) to feed hydraulic fluid under working pressure to the hydraulic drive means (40, 50), and a drive fluid outlet (42, 52) in fluid communication by way of a feed line (S) with a pump fluid inlet (12, 22) of the hydraulic pump unit (10-20) to feed hydraulic fluid output by the hydraulic drive means (40, 50) to the hydraulic pump unit (10-20), and
a fluid exchange device (60) having a fluid feed line (61) in fluid communication with the feed line (S) and opening into a feed connection (61A) for the controlled feed of hydraulic fluid from a hydraulic circuit of the working machine (100) and a fluid discharge line (71) in fluid communication upstream of the fluid feed line (61) with the feed line (S) and opening in a discharge connection (71a) for the controlled discharge of hydraulic fluid from the feed line (S) into the hydraulic circuit of the working machine (100), **characterised in that** the fluid exchange device (60) has a flow regulating valve (62) integrated into the fluid feed line (61) to provide a desired feed volume flow of hydraulic fluid from the hydraulic circuit of the working machine (100) into the feed line (S) and a preload valve (72) which is integrated into the fluid discharge line (71) to compensate for an increase in pressure caused in the feed line (S) by the feed volume flow by delivering a discharge volume flow of hydraulic fluid from the feed line (S) into the hydraulic circuit of the working machine (100).

2. An ancillary implement (1) according to claim 1 wherein the fluid exchange device (60) has a control valve (63) integrated into the fluid feed line (61) to selectively permit or prevent the feed of hydraulic fluid from the hydraulic circuit of the working machine (100) into the feed line (S).

3. An ancillary implement (1) according to claim 2 wherein the fluid exchange device (60) has a pressure sensor (64) adapted to detect a pressure of the hydraulic fluid in the feed line (S) and to output a corresponding pressure signal and which is in signal communication with the control valve (63) so that when a predetermined limit pressure of the hydraulic fluid in the feed line (S) is exceeded the feed of hydraulic fluid from the hydraulic circuit of the working machine (100) into the feed line (S) is prevented.

4. An ancillary implement (1) according to one of claims 1 to 3 wherein the fluid exchange device (60) has a pressure storage means (73) connected to the feed line (S) to receive excess hydraulic fluid from the feed line (S).

5. An ancillary implement (1) according to one of claims 1 to 4 wherein the fluid exchange device (60) has a temperature sensor (65) adapted to detect a temperature of the hydraulic fluid in the feed line (S) and to output a corresponding temperature signal.

6. An ancillary implement (1) according to one of claims 1 to 5 comprising a leakage handling device (80) adapted to collect hydraulic fluid leakage occurring at the ancillary implement (1) and to provide for reception in the hydraulic circuit of the working machine (100).

7. An ancillary implement (1) according to claim 6 wherein the leakage handling device (80) has a collecting tank (82) for collecting the hydraulic fluid leakage and a leakage pump (83) having a leakage pump fluid inlet (84) in fluid communication with the collecting tank (82) to convey hydraulic fluid leakage out of the collecting tank (82) and a leakage pump fluid outlet (85) in fluid communication by way of a leakage discharge line (86) with the discharge connection (71a) of the fluid exchange device (60) so that the hydraulic fluid leakage can be selectively fed to the discharge connection (71a) from the collecting tank (82).

8. An ancillary implement (1) according to claim 7 wherein the leakage handling device (80) has a bypass line (87) which opens into the collecting tank (82) and is connected to the leakage discharge line (86) and into which is integrated a control valve (88) adapted to selectively permit or prevent a return of the hydraulic fluid leakage from the leakage discharge line (86) into the collecting tank (82), and a non-return valve (89) integrated into the leakage discharge line (86) downstream of the collection of the bypass line (87) to block a return flow of hydraulic fluid from the discharge connection (71a) in the direction towards the leakage handling device (80).

9. An ancillary implement (1) according to one of claims 1 to 8 wherein the hydraulic pump unit (10-20) has a hydraulic pump control unit (15, 25) for controlling the working pressure and wherein the pump control unit (15, 25) has a control valve (16, 26) adapted to selectively reduce a control pressure of the pump control unit (15, 25) so that the hydraulic pump unit (10-20) delivers the hydraulic fluid at a predetermined minimum pressure which is reduced in relation to the working pressure and which does not cause operation of the hydraulic drive means (40, 50).

## Revendications

1. Outil supplémentaire (1) pour une machine de travail agricole (100), comportant une unité de pompe hydraulique (10-20) qui est conçue pour amener un fluide hydraulique à une pression de travail prédéterminée, une unité d'entraînement (30) qui est reliée à l'unité de pompe hydraulique (10-20) pour entraîner celle-ci afin de fournir la pression de travail, un entraînement hydraulique (40, 50) comprenant une entrée de fluide d'entraînement (41, 51) qui, par l'intermédiaire d'une conduite de pression (P1, P2), est en liaison fluidique avec une sortie de fluide de pompe (13, 23) de l'unité de pompe hydraulique (10-20) afin d'amener à l'entraînement hydraulique (40, 50) du fluide hydraulique sous pression de travail, et comprenant une sortie de fluide d'entraînement (42, 52) qui, par l'intermédiaire d'une conduite d'alimentation (S) est en liaison fluidique avec une entrée de fluide de pompe (12, 22) de l'unité de pompe hydraulique (10-20) afin d'amener à l'unité de pompe hydraulique (10-20) du fluide hydraulique émis par l'entraînement hydraulique (40, 50), et comportant un dispositif d'échange de fluide (60) avec une conduite d'amenée de fluide (61) qui est en liaison fluidique avec la conduite d'alimentation (S) et qui débouche dans un raccord d'amenée (61a) pour l'amenée contrôlée de fluide hydraulique à partir d'un circuit hydraulique de la machine de travail (100), et avec une conduite d'évacuation de fluide (71) qui est en liaison fluidique avec la conduite d'alimentation (S) en amont de la conduite d'amenée de fluide (61) et qui débouche dans un raccord d'évacuation (71a) pour l'évacuation contrôlée de fluide hydraulique depuis la conduite d'alimentation (S) vers le circuit hydraulique de la machine de travail (100), **caractérisé en ce que** le dispositif d' échange de fluide (60) comporte une valve de régulation de courant (62), qui est incluse dans la conduite d'amenée de fluide (61) pour transférer un courant volumique d'amenée souhaité de fluide hydraulique à partir du circuit hydraulique de la machine de travail (100) vers la conduite d'alimentation (S), et une valve précontrainte (72) qui est incluse, dans la conduite d'évacuation de fluide (71) pour compenser une élévation de pression, produite par le courant volumique d'amenée dans la conduite d'alimentation (S), en transférant un courant volumique d'évacuation de fluide hydraulique à partir de la conduite d'alimentation (S) vers le circuit hydraulique de la machine de travail (100).

2. Outil supplémentaire (1) selon la revendication 1, le dispositif d'échange de fluide (60) comportant une valve de commande (63) qui est incluse dans la conduite d'amenée de fluide (61) afin d'autoriser ou d'empêcher sélectivement l'amenée de fluide hydraulique à partir du circuit hydraulique de la machine de travail (100) avers la conduite d'alimentation (S).

3. Outil supplémentaire (1) selon la revendication 2, le dispositif d'échange de fluide (60) comportant un capteur de pression (64) qui est conçu pour détecter une pression du fluide hydraulique dans la conduite d'alimentation (S) et pour émettre un signal de pression correspondant et qui est en liaison signalétique avec la valve de commande (63), de façon que, en cas de surpassement d'une pression limite prédéterminée du fluide hydraulique dans la conduite d'alimentation (S), l'amenée de fluide hydraulique à partir du circuit hydraulique de la machine de travail (100) vers la conduite d'alimentation (S) soit empêchée.

4. Outil supplémentaire (1) selon une des revendications 1 à 3, le dispositif d'échange de fluide (60) comportant un accumulateur de pression (73) qui est relié à la conduite d'alimentation (S) afin de recevoir du fluide hydraulique excédentaire provenant de la conduite d'alimentation (S).

5. Outil supplémentaire (1) selon une des revendications 1 à 4, le dispositif d'échange de fluide (60) comportant un capteur de température (65) qui est conçu pour détecter une température du fluide hydraulique dans la conduite d'alimentation (S) et pour émettre un signal de température correspondant.

6. Outil supplémentaire (1) selon une des revendications 1 à 5, comprenant un dispositif de gestion de fuites (80) qui est conçu pour recueillir des fuites de fluide hydraulique survenant sur l'outil supplémentaire (1) et de faire en sorte qu'elles soient reprises dans le circuit hydraulique de la machine de travail (100).

7. Outil supplémentaire (1) selon la revendication 6, le dispositif de gestion de fuites (80) comportant un réservoir de collecte (82) pour collecter les fuites de fluide hydraulique et une pompe de fuites (83) avec une entrée de fluide de pompe de fuites (84), qui est en liaison fluidique avec le réservoir de collecte (82) pour faire sortir des fuites de fluide hydraulique hors du réservoir de collecte (82), et avec une sortie de fluide de pompe de fuites (85) qui, par l'intermédiaire d'une conduite d'évacuation de fuites (86), est en liaison fluidique avec le raccord d'évacuation (71a) du dispositif d'échange de fluide (60), de sorte que les fuites de fluide hydraulique peuvent être amenées sélectivement du réservoir de collecte (82) au raccord d'évacuation (71a).

8. Outil supplémentaire (1) selon la revendication 7, le dispositif de gestion de fuites (80) comportant une conduite de détournement (87) qui débouche dans le réservoir de collecte (82), qui est reliée à la conduite d'évacuation de fuites (86) et dans laquelle est incluse une valve de commande (88) qui est conçue pour autoriser ou empêcher sélectivement un retour des fuites de fluide hydraulique à partir de la conduite d'évacuation de fuites (86) vers le réservoir de collecte (82), et comportant une valve anti-retour (89) qui est incluse dans la conduite d'évacuation de fuites (86) en amont du raccord de la conduite de détournement (87) pour interdire un retour de fluide hydraulique à partir du raccord d'évacuation (71a) en direction du dispositif de gestion de fuites (80).

9. Outil supplémentaire (1) selon une des revendications là 8, l'unité de pompe hydraulique (10-20) comportant une unité de commande de pompe hydraulique (15, 25) pour commander la pression de travail, et l'unité de commande de pompe (15, 25) comportant une valve de commande (16, 26) qui est conçue pour abaisser sélectivement une pression de commande de l'unité de commande de pompe (15, 25), de façon que l'unité de pompe hydraulique (10-20) amène le fluide hydraulique avec une pression minimale prédéterminée qui est réduite par rapport à la pression de travail et qui ne provoque pas un fonctionnement de l'entraînement hydraulique (40, 50).
